# EUROPEAN PATENT SPECIFICATION

(11) **EP 1 475 175 B1**
(45) Date of publication and mention of the grant of the patent: **06.09.2006**
(21) Application number: 03010216.4
(22) Date of filing: 06.05.2003
(51) Int. Cl.: B23D 63/18

(54) **Circular saw blade straightening machine**
Kreissägeblatt-Richtmaschine
Machine à dresser les lames de scies circulaires

(43) Date of publication of application: 10.11.2004
(73) Proprietor: Oppliger, Walter, 3661 Uetendorf (CH)
(72) Inventor: Oppliger, Walter, 3661 Uetendorf (CH)
(74) Representative: Braun, André jr.

(56) References cited:
- FR-A- 1 269 308
- US-A- 450 178
- US-A- 4 085 630
- US-A- 4 138 908
- US-A- 5 522 283
- US-A- 6 067 879

## Description

The invention relates to a method of treatment of circular saw blades according to the preamble of claim 1 and to a circular saw blade straightening machine for eliminating unevennesses in circular saw blades according to the preamble of claim 2, comprising rollers for straightening uneven sections of the saw blade.

Such a method and such a machine are known from US-A-5,522,283.

When circular saws are used in woodworking, unevennesses occur on the saw blades; after only a few hours of use, these unevennesses can assume proportions that greatly impair the performance of the circular saw. Circular saw blades therefore have to be straightened at regular intervals, i.e. unevennesses have to be eliminated.

A straightening machine for this purpose is described in EP-B-521 824. The straightening rollers for flattening unevennesses directed towards the different sides of the saw blade run on axes being parallel to a radius of the saw blade. Thus the straightening rollers treat the saw blade along circular tracks, whereby the diameter of the track depends on the distance of the rollers from the hub or the center of the blade.

US-A-5,522,283 discloses a method of treatment of circular saw blades with a straightening machine for eliminating unevennesses in the saw blades. The machine has rollers for flattening uneven sections of the saw blade. The rollers are arranged with their axes perpendicular to a radius of the saw blade and are running along a radial track according to a relative movement between the saw blade and the rollers.

Various efforts have been made to improve the shape of the rollers with a view to simpler construction without loosing effectiveness. Moreover, it has turned out that while the prior art machines are very effective in eliminating most of the unevennesses, they still leave the blades with certain unbalances which is undesirable.

The object of the invention is to propose a circular saw blade straightening machine which is even simpler in construction and is capable of an improved treatment of the saw blade.

This is achieved according to the invention by a method according to claim 1 and by a straightening machine according to claim 2.

Preferred embodiments are disclosed by the dependent claims 2-5.

An embodiment of the invention is described below with the aid of the accompanying drawing, in which:
- Fig. 1: is a front view of the saw blade and straightening rollers of an embodiment of the machine, and
- Fig. 2: is a side view of the embodiment of Fig. 1
- Fig. 3: is a front view of an alternative embodiment of the machine, and
- Fig. 4: is a side view of the embodiment of Fig. 3
- Fig. 5: is a front view of another embodiment of the machine
- Fig. 6: is a side view of the embodiment of Fig.5

In the following description the content of EP-B-0 521 824 is incorporated herein by reference. Design details known from said patent description are not repeated here.

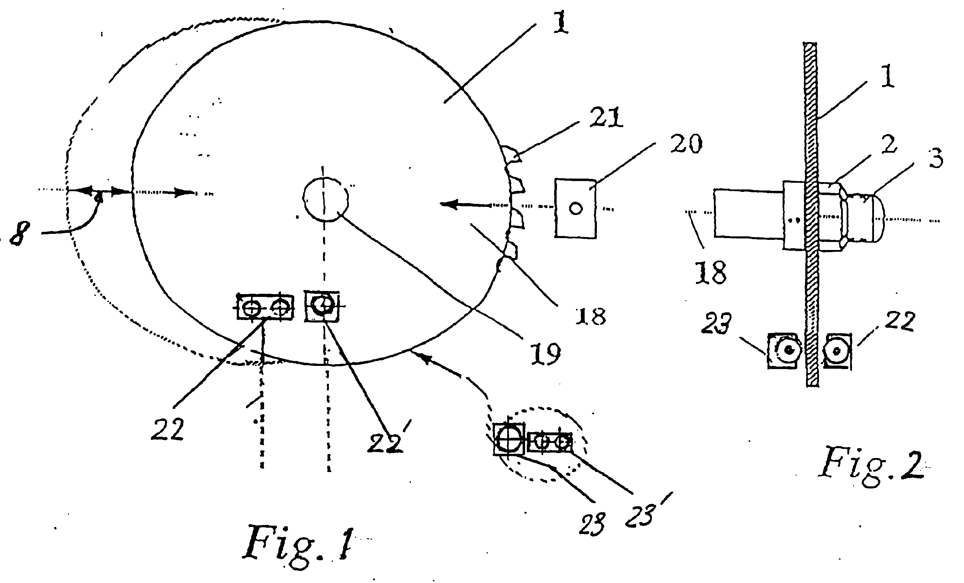

Fig. 1 shows a saw blade 1 with teeth 21, a hub 2 and a shaft 3. A first set of straightening rollers consisting of a twin ball cage 22 with two balls and a ball cage 22' with one ball is arranged in front of the saw blade. The two balls of the twin ball cage are of equal diameter, whereas the diameter of the single ball in the second ball cage 22' is larger than that of the twin balls. Another set of rollers 23 and 23' is positioned at the backside the saw blade exactly opposite the first set of rollers. Opposite the twin ball cage 22 is a single ball cage 23 and opposite the single ball cage 22' is a twin ball cage 23'.

The rear side set 23, 23' is shown in Figs. 1 and 2 next to the saw blade, the arrow indicating that they are located on that side of the saw blade which is not visible in Figs. 1 and 2.

The two sets of rollers are arranged in a roller block in laterally rigid positions relative to each other but are provided with hydraulic means to be pressed from both sides against the saw blade. The hydraulic means are known as such and are not shown for clarity reasons. In an alternative embodiment of the invention it is of course possible, to use pneumatic means or other mechanical means instead of hydraulic means.

For flattening out the unevennesses the saw blade is rotated while the respective balls are pressed against its surface. As known from prior art devices, if the balls 22' and 23' are pressed against the blade they are flattening out dents projecting towards the front of the blade. In the same position of the rollers but with the saw blade shifted to the side as indicated by the arrows 8 the rollers 22 and 23 flatten dents towards the rear side of the blade.

Accordingly, the saw blade is moved linearly between the two positions for the smoothing of the front side and the rear side. This takes place in such a way that first one side, for example the front side, is completely smoothed and then the saw blade is moved and the whole of the rear side is treated. Alternatively, the saw blade can be treated in such a way that each track is straightened on the front and rear sides before the next track is treated. In this case the saw blade is moved between the two positions for each track.

A commercially available laser instrument 20 is provided for measuring purposes. Before the treatment is started, the laser reference line is aligned precisely with the center of the saw blade. The laser travels as close as possible to the hub 2 and establishes a zero reference for level. It then travels to the tooth base of the saw blade 1 and establishes the distance to the tooth base in relation to this zero reference.

A significant advantage of the balls is the fact that they can move over the blade surface in any direction. Thus it is not necessary to effect the flattening along circular tracks while the blade is rotating. It is equally well possible to work the blade along radial tracks from the hub outwardly or from the edge inwardly. Using the balls this is possible without any change of their position because, as mentioned before, balls can move in any direction.

For the treatment along radial tracks the angular position of significant dents is determined. This angular position corresponding to a defined radial line of the saw blade is then brought in line with the intended track under the rollers. Depending on the shape and size of the dents the treatment the blade may be turned in angular steps between subsequent tracks. Again it is possible either to treat first all dents towards one side of the blade and thereafter the dents towards the other side. Alternatively it is possible to change the relative blade positions according to the arrows 8 for each track or each couple of tracks.

For the relative movement between the blade and the balls to along the flattening tracks either the blade may be moved in the direction perpendicular to that of the arrows 8 or the roller block is moved along the radial line.

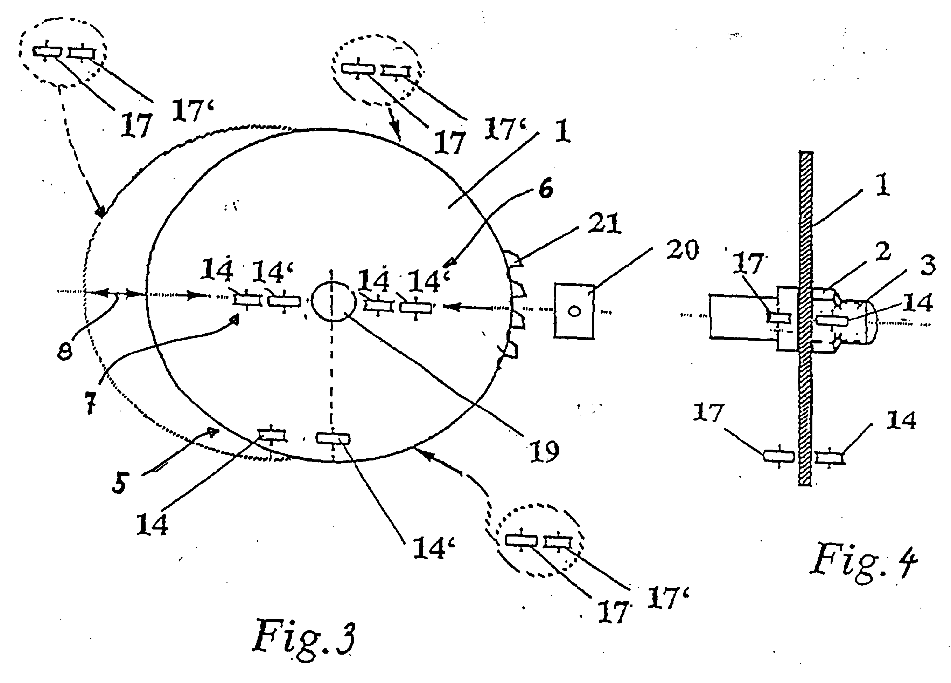

Fig. 3 shows again a saw blade 1 with teeth 21, a hub 2 and a shaft 3. A first pair of straightening rollers consisting of a concave convex roller 14 and a convex roller 14' is seen in three different positions. Another pair of rollers 17 and 17' is positioned at the backside the saw blade exactly opposite the first pair of rollers. Opposite the concave roller 14 is a convex roller 17 and opposite the convex roller 14 is a concave roller 17'.

The rollers 17 and 17' on the rear side are shown in Figs. 1 and 3 next to the saw blade, the arrow indicating that they are located on that side of the saw blade which is not visible in Figs. 1 and 3.

The two pairs of rollers are arranged in a roller block in laterally rigid positions relative to each other but are provided with hydraulic means to be pressed from both sides against the saw blade. The hydraulic means are known as such and are not shown for clarity reasons. In an alternative embodiment of the invention it is of course possible, to use pneumatic means or other mechanical means instead of hydraulic means.

As known from the prior art device, if in position 5 the rollers 14 and 17 are pressed against the blade they are flattening out dents projecting towards the front of the blade. In the same position of the rollers but with the saw blade shifted to the side as indicated by the arrows 8 the rollers 14' and 17' flatten dents towards the rear side of the blade.

Accordingly, the saw blade is moved linearly between the two positions for the smoothing of the front side and the rear side. This takes place in such a way that first one side, for example the front side, is completely smoothed and then the saw blade is moved and the whole of the rear side is treated. Alternatively, the saw blade can be treated in such a way that each track is straightened on the front and rear sides before the next track is treated. In this case the saw blade is moved between the two positions for each track.

A commercially available laser instrument 20 is provided for measuring purposes. Before the treatment is started, the laser reference line is aligned precisely with the center of the saw blade. The laser travels as close as possible to the hub 2 and establishes a zero reference for level. It then travels to the tooth base of the saw blade 1 and establishes the distance to the tooth base in relation to this zero reference.

The roller block as a whole is capable of being shifted to a position 6 to the right of the hub and to a position 7 to the left of the hub. In these two positions the axes 13 and 13' of the rollers are no longer parallel but perpendicular to a respective radius of the saw blade. If in these positions the rollers are pressed against the blade and the blade is moved according to the arrows, the blade is treated along a radial track. To press a radial line away from the front side the rollers 14' and 17' in position 7 are activated, because these rollers can come closer to the hub. To press radial lines towards the front the rollers 14 and 17 in position 6 are used.

For the treatment along radial tracks the angular position of significant dents is determined. This angular position corresponding to a defined radial line of the saw blade is then brought in line with the intended track under the rollers in positions 6 and/or 7.

Depending on the shape and size of the dents the treatment may be effected in one position 6 or 7 and the blade may be turned in angular steps between subsequent tracks. Another possibility is to alternate between positions 6 and 7 for each subsequent track.

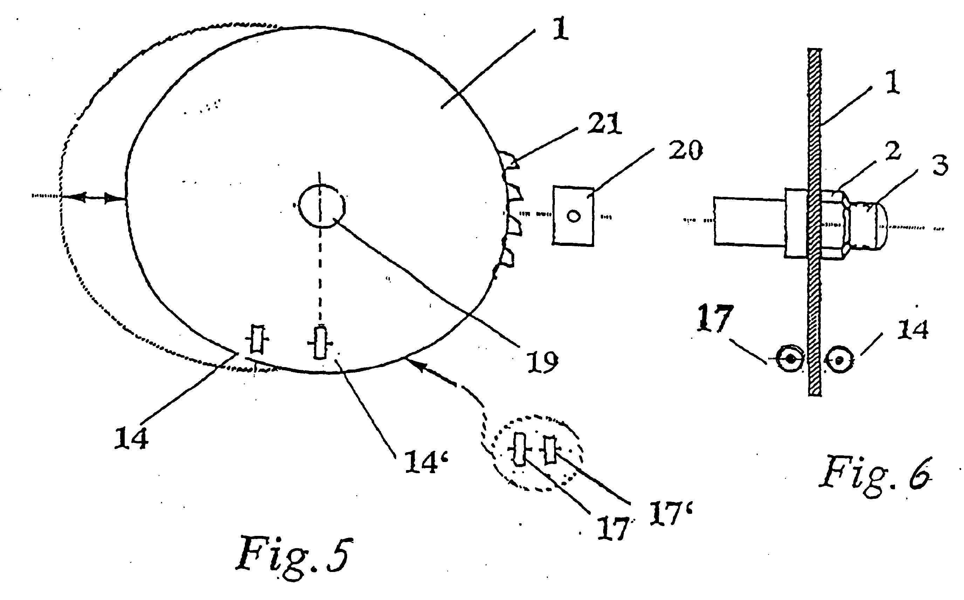

In the embodiment according to Figs. 5 and 6 the roller block is not moved as a whole to positions 6 or 7 but the rollers are individually turned by 90°. For rolling the individual tracks the rollers are radially advanced. For changing between the rollers 14, 17 and 14', 17,' the blade is shifted according to arrows 8.

## Claims

1. Method of treatment of circular saw blades (1) with a straightening machine for eliminating unevennesses in circular saw blades (1), comprising straightening members for straightening uneven sections of the saw blade (1), the straightening members running along a radial track according to a relative movement between the saw blade and the rollers, **characterized in that** the straightening members are constituted by balls (22, 22', 23, 23') that are capable of moving in any direction.

2. Circular saw blade straightening machine for eliminating unevennesses in circular saw blades, comprising straightening members for straightening uneven sections of the saw blade, **characterized in that** straightening members for flattening unevennesses directed towards the different sides of the saw blade (1) are constituted by balls (22, 22', 23, 23') that are capable of moving in any direction.

3. Circular saw blade straightening machine according to claim 2, **characterized in that** the straightening members for flattening unevennesses directed towards the different sides of the saw blade (1) are constituted by sets of balls (22, 22', 23, 23') with twin balls on one side of the blade and a single ball opposite the central point between the twin balls on the other side of the blade.

4. Circular saw blade straightening machine according to claim 2 comprising means for achieving relative movement between the blade and the balls along radial tracks of the blade.

5. Circular saw blade straightening machine according to claim 2, **characterized in that** a laser instrument (20) is provided for measuring the unevennesses.

## Patentansprüche

1. Methode zur Behandlung von Kreissägeblättern (1) mit einer Richtmaschine zur Beseitigung von Unebenheiten in Kreissägeblättern (1) mit Richtteilen zum Ausrichten unebener Bereiche des Sägeblattes (1), wobei die Richtteile einer radialen Laufbahn entlang laufen entsprechend einer Relativbewegung zwischen dem Sägeblatt und den Rollen, **dadurch gekennzeichnet, dass** die Richtteile aus Bällen (22, 22', 23, 23') zusammengesetzt sind, die sich in jede Richtung bewegen können.

2. Kreissägeblatt-Richtmaschine zur Beseitigung von Unebenheiten in Kreissägeblättern mit Richtteilen zum Ausrichten unebener Bereiche des Sägeblattes, **dadurch gekennzeichnet, dass** Richtteile zur Abflachung von nach verschiedenen Seiten des Sägeblattes (1) gerichteten Unebenheiten aus Bällen (22, 22', 23, 23') zusammengesetzt sind, die sich in jede Richtung bewegen können.

3. Kreissägeblatt-Richtmaschine nach Anspruch 2, **dadurch gekennzeichnet, dass** die Richtteile zur Abflachung von nach verschiedenen Seiten des Sägeblattes (1) gerichteten Unebenheiten aus Einheiten von Bällen (22, 22', 23, 23') zusammengesetzt sind mit Zwillingsbällen auf der einen Seite des Blattes und einem einzelnen, dem zentralen Punkt zwischen den Zwillingsbällen gegenüber liegenden Ball auf der anderen Seite des Blattes.

4. Kreissägeblatt-Richtmaschine nach Anspruch 2, die eine Einrichtung enthält, um eine Relativbewegung zwischen dem Blatt und den Bällen entlang radialen Laufbahnen des Blattes zu erreichen.

5. Kreissägeblatt-Richtmaschine nach Anspruch 2, **dadurch gekennzeichnet, dass** ein Lasermessgerät (20) zur Messung der Unebenheiten vorgelegt wird.

## Revendications

1. Méthode de traitement pour des lames de scies circulaires (1) avec une machine à dresser pour l'élimination d'inégalités dans des lames de scies circulaires (1) avec des éléments dresseurs pour redresser des zones inégales de la lame de scie (1), où les éléments dresseurs passent le long d'une piste radiale selon un mouvement relatif entre la lame de scie et les rouleaux, **caractérisée en ce que** les éléments dresseurs sont constitués par des balles (22, 22', 23, 23') qui sont capables de se déplacer dans toutes les directions.

2. Machine à dresser les lames de scies circulaires pour l'élimination d'inégalités dans des lames de scies circulaires avec des éléments dresseurs pour redresser des zones inégales de la lame de scie, **caractérisée en ce que** les éléments dresseurs pour le planage d'inégalités dirigées vers les différents côtés de la lame de scie (1) sont constitués par des balles (22, 22', 23, 23') qui sont capables de se déplacer dans toutes les directions.

3. Machine à dresser les lames de scies circulaires selon la revendication 2, **caractérisée en ce que** les éléments dresseurs pour le planage d'inégalités dirigées vers les différents côtés de la lame de scie (1) sont constitués par des ensembles de balles (22, 22', 23, 23') avec des balles jumelées d'un côté de la lame et une seule balle à l'opposé du point central entre les balles jumelées de l'autre côté de la lame.

4. Machine à dresser les lames de scies circulaires selon la revendication 2, comprenant un moyen pour obtenir un mouvement relatif entre la lame et les balles le long des pistes radiales de la lame.

5. Machine à dresser les lames de scies circulaires selon la revendication 2, **caractérisée en ce qu'**un appareil de mesure (20) est fourni pour mesurer les inégalités.
